# EUROPEAN PATENT SPECIFICATION

(11) **EP 1 223 366 B1**
(45) Date of publication and mention of the grant of the patent: **18.04.2012**
(21) Application number: 02000731.6
(22) Date of filing: 11.01.2002
(51) Int. Cl.: F16H 57/04, F16H 55/56, F16H 9/18

(54) **V-belt type automatic transmission**
Keilriemenautomatikgetriebe
Variateur de vitesse automatique à courroie en "V"

(30) Priority: 12.01.2001 JP 2001004781
(43) Date of publication of application: 17.07.2002
(73) Proprietor: Yamaha Hatsudoki Kabushiki Kaisha, Iwata-shi, Shizuoka-ken (JP)
(72) Inventor: Takebe, Mitsukazu, c/o Yamaha Hatsudoki K. K., Iwata-shi, Shizuoka-ken (JP); Oishi, Akifumi, c/o Yamaha Hatsudoki K. K., Iwata-shi, Shizuoka-ken (JP)
(74) Representative: Grünecker, Kinkeldey, Stockmair & Schwanhäusser

(56) References cited:
- CA-A- 968 189
- DE-B- 1 063 479
- DE-C- 829 536
- JP-A- 7 332 474

## Description

The invention relates to a V-belt type automatic transmission according to the preamble of independent claim 1.

Conventionally, the V-belt type automatic transmission for motorcycles includes a drive pulley attached to the crankshaft of an engine. Therefore, the drive pulley is heated with the heat of the engine as well as the heat produced by the friction with the V-belt. When the temperature of the drive pulley rises, the V-belt is more likely to wear. Therefore, it is necessary to cool the drive pulley.

DE 829 536 C and DE 1 063 479 B each disclose a V-belt type automatic transmission falling under the wording of the preamble of claim 1.

An example of V-belt type automatic transmission with a cooled drive pulley is disclosed in the publication of a laid-open Japanese utility model application JP-U-562-9755.

The drive pulley of the V-belt type automatic transmission shown in the above publication is constituted as follows: A fixed sheave is secured to the end of the crankshaft, a movable sheave is supported for free axial movement in a position on the crankshaft nearer to the engine side than the fixed sheave, and a centrifugal type speed changing mechanism is placed in a position nearer to the engine side than the movable sheave. The fixed sheave is provided with a plurality of cooling fins erected from its outside end portion. The movable sheave is formed with radial cooling air passages inside a disk-like transmitting portion contacted with a V-belt. The cooling air passages are made to be open on one side at the side surface facing the fixed sheave in the axial portion of the disk-like transmitting portion and to be open on the other side at the peripheral surface of the movable sheave.

With the V-belt type automatic transmission, the disk portion of the movable sheave serves as a centrifugal fan; as the movable sheave rotates, air is drawn from the axial portion into the cooling air passages and discharged from the peripheral portion. Namely, the movable sheave is cooled as air flows through the cooling air passages of the disk-like transmitting portion.

With the cooling arrangement constituted as described above, however, the movable sheave cannot be cooled sufficiently. For, the amount of air drawn into the cooling air passage is thought to be small. That is to say, the inlet of the cooling air passage is open to the space surrounded with the fixed sheave, the movable sheave, and the V-belt, and so fresh air can enter that space only from behind the vehicle body.

Accordingly, it is the object of the present invention to solve the above problem by providing a V-belt type automatic transmission capable of securely cooling the movable sheave.

For a V-belt type automatic transmission, the above object is solved in an inventive manner with the features of independent claim 1. Such transmission features inventively comprise radial passages that are formed between a transmitting portion in contact with said V-belt and a speed changing mechanism portion in contact with weights of a centrifugal type speed changing mechanism.

Accordingly, as the movable sheave rotates, air is drawn from one end of the axial passages (air inlet openings) into the cooling air passage, caused to flow from the axial passages in the movable sheave to the radial passages. The air, after flowing through the radial passages radially outward, is discharged from the radially outside end. Since the one end (air inlet openings) of the axial air passages is made to be open to a side of the movable sheave, air flows in easily, so that air is made to flow efficiently through the cooling air passage. Since the air inlet openings are located on the outer side of the movable sheave, which is located axially opposite to the side of contact, at which the V-belt contacts the movable sheave of the drive pulley, cooling air can be drawn from the entire outer side of the moveable sheave and not only from behind.

According to a preferred embodiment of the V-belt type automatic transmission, the transmitting portion and the speed changing mechanism portion of the movable sheave are made as separate components with their respective axial portions secured to the movable sleeve.

Furthermore, it is possible to form axial passages by forming axially extending grooves in the inside cylindrical surface of the speed changing mechanism portion of the movable sheave and securing a movable sleeve to the inside cylindrical portion of the speed changing mechanism portion. The radial passages may be formed with radial projections on the side surface, opposing the transmitting portion, of the speed changing mechanism portion, and placing the speed changing mechanism portion in facing contact with the transmitting portion. Therefore, of the members constituting the movable sheave, the only member that is formed in complicated shape is the speed changing mechanism portion, and the other members may be formed in simple shapes.

Other preferred embodiments of the present invention are laid down in further dependent claims.

In the following, the present invention is explained in greater detail with respect to several embodiments thereof in conjunction with the accompanying drawings, wherein:
- FIG. 1: is a side view of a scooter type motorcycle on which the V-belt type automatic transmission according to the invention is mounted;
- FIG. 2: shows a cross-section of the V-belt type automatic transmission;
- FIG. 3: shows a cross-section of the drive pulley;
- FIG. 4: is a side view of the movable sheave housed in the transmission case;
- FIGs. 5a,b,c: show the speed changing mechanism portion of the movable sheave; and
- FIGs. 6a,b: show a cam plate.

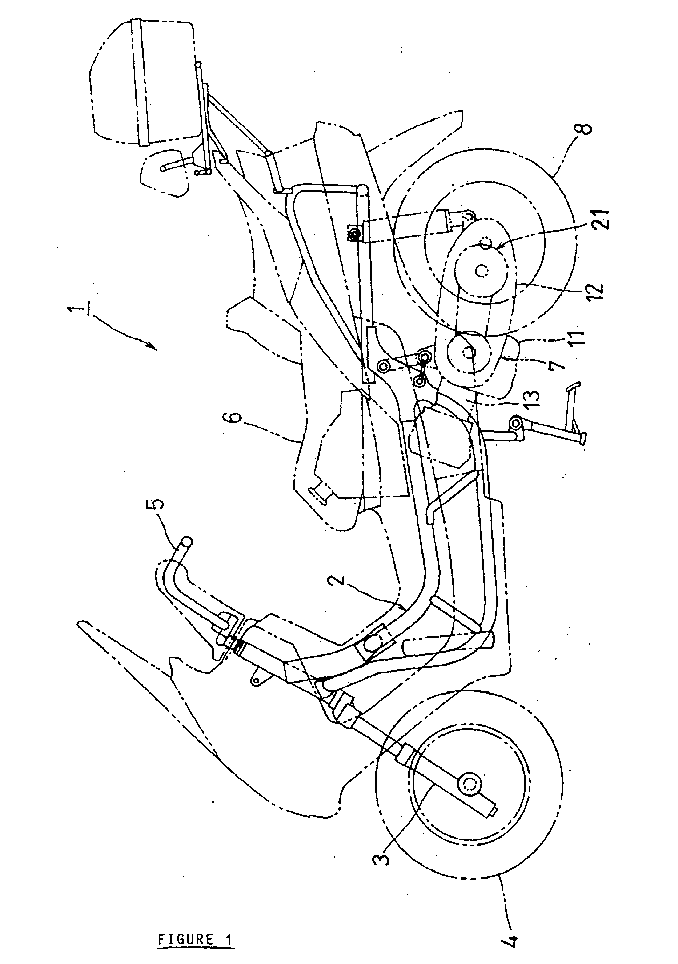

A V-belt type automatic transmission as an embodiment of the invention will be hereinafter described in detail in reference to FIGs. 1 to 6. Here, a V-belt type automatic transmission for use in motorcycles is used as an example to which the invention is applied.

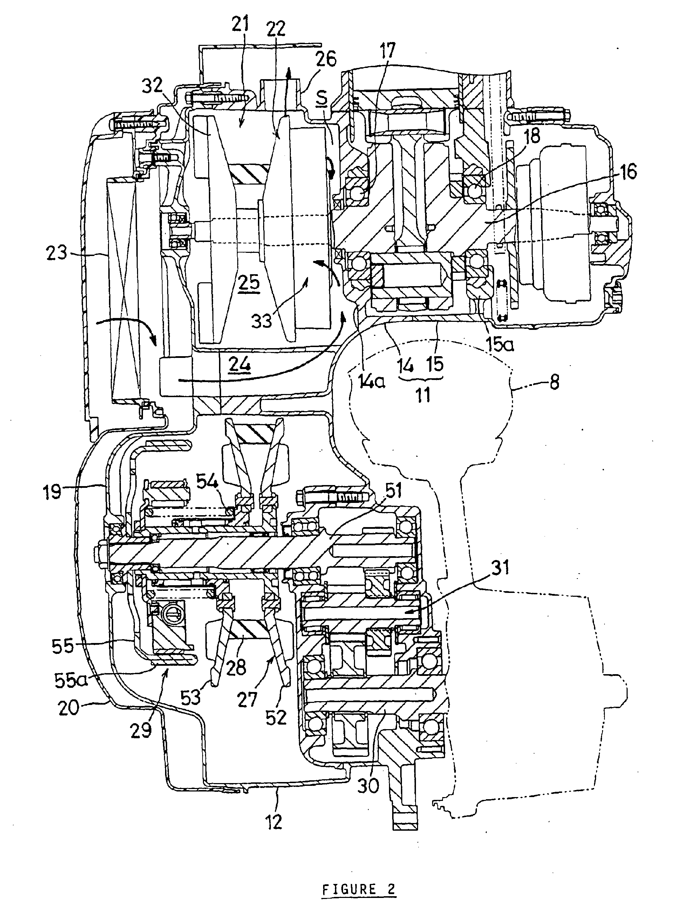

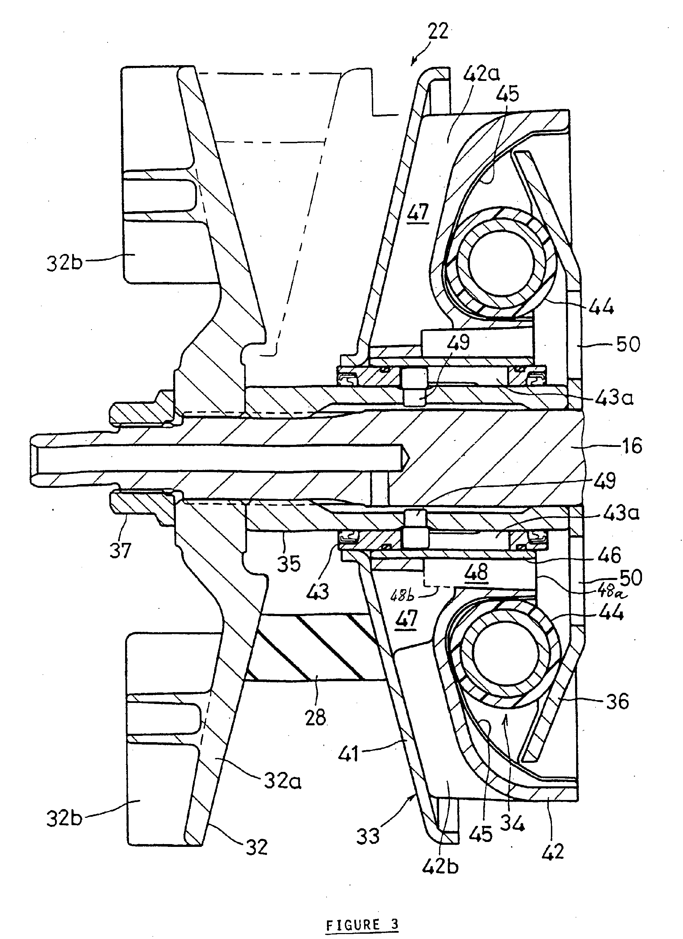

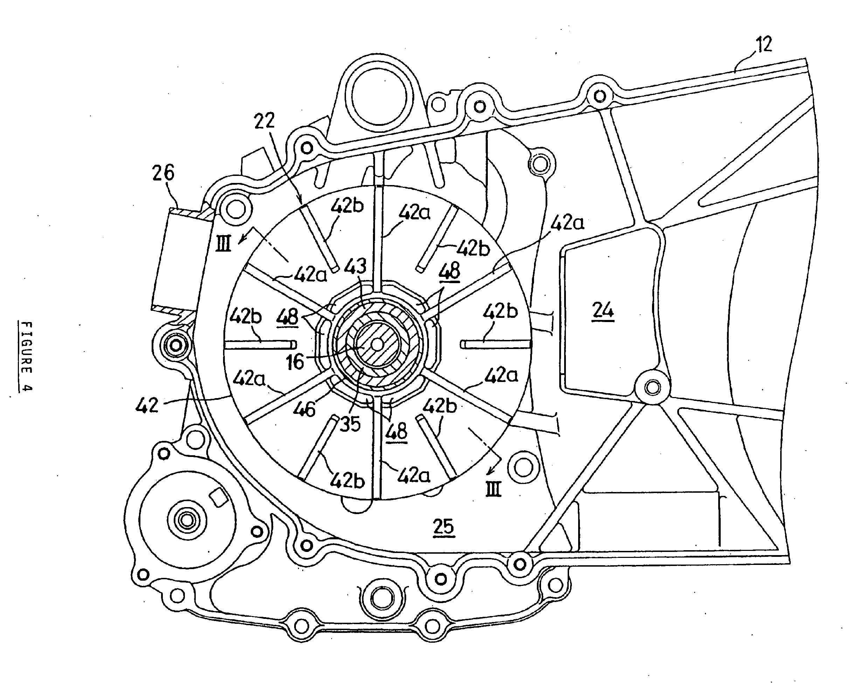

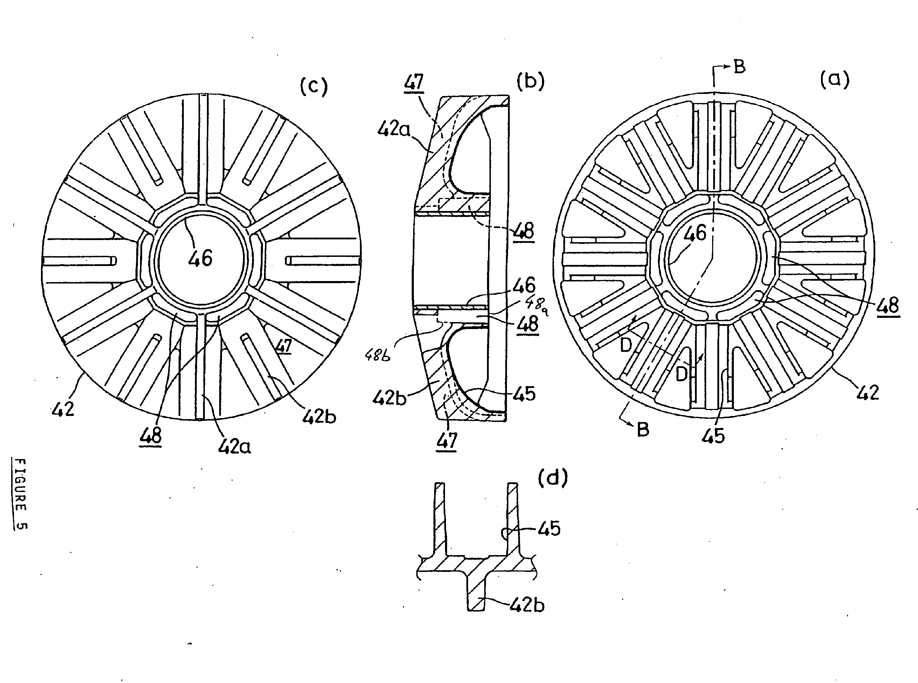

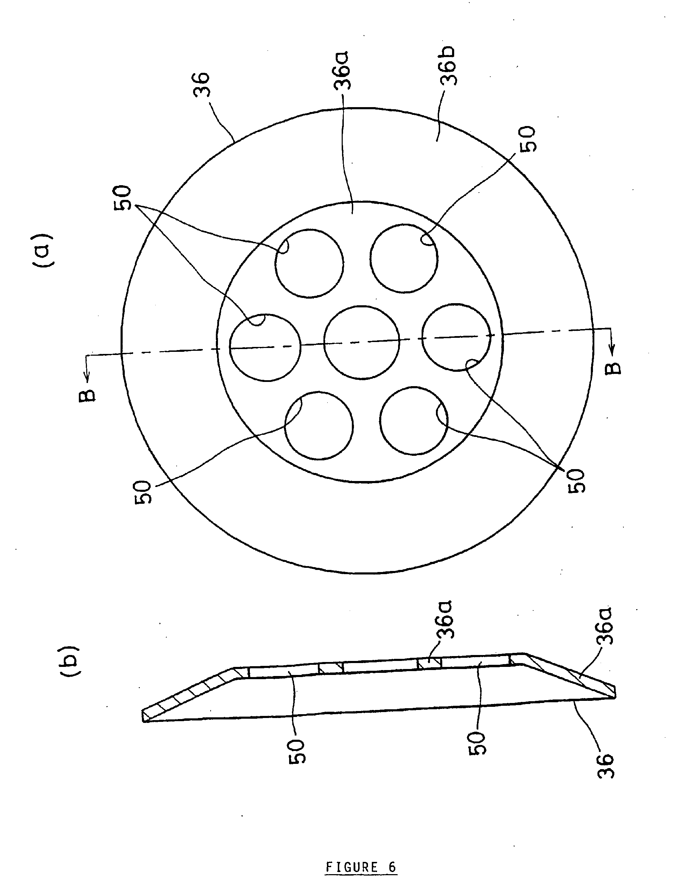

FIG. 1 is a side view of a scooter type motorcycle on which the V-belt type automatic transmission according to the invention is mounted. FIG. 2 shows a section of the V-belt type automatic transmission. FIG. 3 shows a section of the drive pulley. FIG. 4 is a side view of the movable sheave housed in the transmission case, with the transmitting portion of the movable sheave being removed and with the axial portion in cross section. In FIG. 4 the line III-III shows the position where the sectional view of FIG. 3 is taken. FIG. 5 as a whole shows the speed changing mechanism portion of the movable sheave. FIG. 5(a) is a side view as seen from the side of the centrifugal speed changing mechanism portion. FIG. 5(b) shows a section as seen along the line B-B in FIG. 5(a). FIG. 5(c) is a side view as seen from the fixed sheave side. FIG. 5(d) shows a section as seen along the line D-D in FIG. 5(a). FIG. 6 as a whole shows a cam plate. FIG. 6(a) is a front view. FIG. 6(b) shows a section as seen along the line A-A in FIG. 6(a).

In those figures, the reference numeral 1 stands for a scooter type motorcycle for the present embodiment. In FIG. 1 are shown: a vehicle body frame 2, a front fork 3, a front wheel 4, steering handlebars 5, a seat 6, a unit swing type engine 7, and a rear wheel 8.

The engine 7 is a water-cooled, four-stroke cycle, single cylinder engine, supported for free up-and-down swinging on the vehicle body frame 2, with a crankcase 11 formed integrally with a transmission case 12, and with the axis of a cylinder 13 sloping up forward. The rear wheel 8 is supported for free rotation at the rear end portion of the transmission case 12.

The crankcase 11, as shown in FIG. 2, is formed so that it may be divided into a left half 14 located on the left (as seen from a rider) and a right half 15 on the right (as seen from the rider) The crankshaft 16 is supported for free rotation with bearings 17 and 18 fitted in the side walls 14a and 15a of the left and right halves 14 and 15.

The left half 14 of the crankcase 11 constitutes as shown in FIG. 2 a transmission case 12 together with a transmission case cover 19 attached to the left half 14. In this embodiment, an outside cover 20 is attached to the outside of the transmission case cover 19 to improve sound-proof property.

A V-belt type automatic transmission 21 is housed in the transmission case 12. The front end part of the transmission case 12 constitutes an enclosure for introducing cooling air to the drive pulley 22 of the V-belt type automatic transmission 21. In the enclosure as shown in FIGs. 2 and 4, external air is drawn through an air filter 23 provided at the left end of the front end part of the transmission case, caused to flow through a passage 24 in the transmission case to a drive pulley chamber 25, and discharged outside the transmission case from a discharge duct 26 located at the front end of the transmission case. A fan for causing the air to flow through the enclosure is a drive pulley 22, which will be described later.

The V-belt type automatic transmission 21 is constituted, as shown in FIG. 2, with the drive pulley 22 attached to the left side end of the crankshaft 16, a driven pulley 27 supported at the rear end part of the transmission case 12, a V-belt 28 girdling both of the pulleys 22 and 27, a centrifugal clutch 29 placed coaxially with the driven pulley 27, and a transmission (speed reducing mechanism) 31 for transmitting rotation from the centrifugal clutch 29 to a wheel shaft 30.

As shown in fig. 3, the drive pulley 22 is made up of a fixed sheave 32 secured to the crankshaft 16, a movable sheave 33 which forms a V-groove together with the fixed sheave 32, and a centrifugal speed changing mechanism 34 for driving the movable sheave 33. The fixed sheave 32 is made of a disk 32a in contact with the V-belt 28 and provided with a plurality of heat radiating fins 32b rising from the outer end portion of the disk 32a, fitted onto the crankshaft 16 by means of splines, and tightened to the crankshaft 16 using a nut 37, so that a fixed sleeve 35 for supporting the movable sheave, and a cam plate 36 of the centrifugal speed changing mechanism 34 are tightened together.

The movable sheave 33 is made up of a disk 41 forming a V-groove in cooperation with the disk 32a of the fixed sheave 32, a weight holder 42 in facing contact with the back side of the disk 41 (the surface located opposite the V-belt 28), and a movable sleeve 43 for combining together the disk 41 and the weight holder 42.

The disk 41 is made of steel material press-formed to have smooth surfaces on its front and back sides. The disk 41 is the transmitting portion, as described herein, of the movable sheave 33.

The weight holder 42 is made by casting. As shown in FIGs. 3 and 5, the weight holder 42 is provided with a number of projecting walls 42a, 42b extending radially side by side on its one end opposite the disk 41, and a number of grooves 45 for the weights 44 of the centrifugal speed changing mechanism 34 to roll along at the other end. The axial portion of the weight holder 42 is secured to the movable sheave 33 through a cylindrical member 46. The weight holder 42 is constituting the speed changing mechanism portion of the movable sheave 33 related to the invention.

The projecting ends of the projecting walls 42a, 42b are brought into contact with the back side of the disk 41 as the weight holder 42 and the disk 41 are attached to the movable sleeve 43. With the above constitution, radially extending passages 47 are formed between the disk 41 and the weight holder 42, with the projecting walls 42a, 42b serving as side walls.

The weight holder 42, in its axial portion, is provided with a plurality of axial passages 48 extending axially and located at circumferential intervals. The axial passages 48, at their ends 48a (air inlet openings) on one side, are made open at the end of the weight holder 42 opposite the disk 41 while their ends on the other side are connected to the radially inside ends of the radially extending passages 47. The axial passages 48 and the radial passages 47 constitute a cooling air passage in the movable sheave 33.

The movable sleeve 43 is fitted over the fixed sleeve 35 so that the rotary movement of the sleeve 43 is prevented as a guide pin 49 planted in the fixed sleeve 35 fits into an elongate hole 43a and that the axial movement of the movable sleeve 43 is permitted.

The centrifugal speed changing mechanism 34 is made up of the grooves 45 in the weight holder 42, cylindrical weights 44 placed for free rolling in the grooves 45, and a cam plate 36 holding the weights 44 in cooperation with the grooves 45. As shown in FIGs. 3, 5(b), and 6, the grooves 45 and the cam plate 36 are formed as slopes, so that their mutual distance decreases radially outward. Because of this, the movable sheave 33 moves axially (to the left in FIG. 3) as the weights 44 move radially outward with centrifugal forces.

As shown in FIG. 6, the cam plate 36 is formed in a dish shape with a plurality of through holes 50 bored in a disk portion 36a located radially inward (in the portion radially inside the peripheral portion 36b contacted with the weights 44) The through holes 50, as shown in FIG. 3, face the ends on one side of the axial passages 48 in the state of the cam plate 36 and the movable sheave 33 attached to the crankshaft 16. Therefore, the through holes 50 constitute part of the axial passages 48 and are open so that the ends (air inlet) on one side of the axial passages 48 are directed toward the vehicle body's right side of the movable sheave 33. As shown in FIG. 2, an annular space S around the crankshaft 16 is formed between the cam plate 36 and the inside wall of the transmission case 12 (the side wall 14a of the left half portion 14) The ends on one side of the axial passages 48 are connected to the space S. That is to say, the ends on one side of the axial passages 48 are made open on the side of the movable sheave 33.

The driven pulley 27 of the V-belt type automatic transmission 21 is similar to that used in conventional V-belt type automatic transmission: As shown in FIG. 2, it is supported for free rotation on the input shaft 51 of the transmission 31 to transmit rotation to the input portion of the centrifugal clutch 29 which will be described later. FIG. 2 also shows: a fixed sheave 52 and a movable sheave 53 of the driven pulley 27, and a compression coil spring 54 for urging the movable sheave 53. Incidentally, the upper half, above the input shaft 51, of FIG. 2 shows the state of the movable sheave 53 in a position nearest to the fixed sheave 52 while the lower half, below the input shaft 51, of FIG. 2 shows it in a position farthest from the fixed sheave 52.

The centrifugal clutch 29, as is conventionally well known, transmits power from the input portion (driven pulley 27) to the input shaft 51 of the transmission 31 when the rotation of the driven pulley 27 exceeds a predetermined speed. The housing 55 of a bottomed cylinder shape of the centrifugal clutch 29 is made with its peripheral portion turned back outward by spinning process into an integral, peripheral ring 55a. The peripheral ring 55a is to reinforce the housing 55 and to increase the thermal capacity of the housing to improve the heat resistance. Forming the peripheral ring 55a by spinning process reduces cost in comparison with welding a separate metallic ring.

The transmission 31 is constituted to reduce speed in two stages, so that the rotation of the input shaft 51 is reduced and transmitted to the wheel shaft (output shaft) 30.

With the V-belt type automatic transmission 21 constituted as described above, as the drive pulley 22 rotates together with the crankshaft 16 of the engine 7, the movable sheave 33 of the drive pulley 22 works as a blower fan, so that air is blown outward from the outer end portion (radially outer side end) of the radial passages 47 by the centrifugal force. At this time, air in the transmission case 12 is drawn through the through holes 50 of the cam plate 36 into the axial passages 48 of the movable sheave 33.

To put it more in detail, as the movable sheave 33 rotates, air in the transmission case 12 is drawn from one end side of the axial passages 48 into the cooling air passage of the movable sheave 33, flows in the movable sheave 33 from the axial passages 48 to the radial passages 47, flows radially outward in the radial passages 47, and is discharged from the radially outside end of the radial passages 47.

Air drawn with the blower fan made of the movable sheave 33 flows as shown with arrows in FIG. 2 through the air filter 23 of the transmission case 12 into the transmission case 12, through the passage 24 in the transmission case 12, into the space S between the cam plate 36 and the inside wall of the transmission case 12, and into the through holes 50 of the cam plate 36. On the other hand, air coming out of the movable sheave 33 is discharged outward from the discharge duct 26 at the front end of the transmission case.

Therefore, with this V-belt type automatic transmission 21, since the one side ends 48a of the axial passages 48 are open to the side of the movable sheave 33 and so air flows easily into the cooling air passage in the movable sheave 33, and air may be caused to flow efficiently through the cooling air passage. As a result, cooling air amount may be increased and the temperature of the movable sheave 33 may be lowered in comparison with conventional arrangements. Since the fixed sheave 32 can give off heat from the heat radiating fins 32b, the entire drive pulley 22 may be cooled efficiently.

With this V-belt type automatic transmission 21, since the transmitting portion (disk 41) of the movable sheave 33 and the speed changing mechanism portion (weight holder 42) are made separately and their respective axial portions are secured to the movable sleeve 43, it is possible to form the axial passages 48 by forming the axially extending grooves in the inside cylindrical portion of the weight holder 42 and by securing the movable sleeve 43 to the inside cylindrical portion. It is also possible to form the radial passages 47 by forming the projecting walls 42a, 42b positioned radially on the surface, opposite the disk 41, of the weight holder 42, and by bringing the weight holder 42 into facing contact with the disk 41. Therefore, among the members constituting the movable sheave 33, the only member that is formed in complicated shape is the weight holder 42, while the other members maybe formed in simple shapes.

While the above embodiment is described about the application of the invention to the V-belt type automatic transmission for use in motorcycles, this invention may also be applied to other vehicles for running on irregular terrains or snow.

At an automatic transmission of V-belt type with the movable sheave of a drive pulley formed with cooling air passages, the cooling air passages are made up of plural axial passages formed to extend in the axial direction in the axial portion of the movable sheave and radial passages formed radially between a transmitting portion in contact with a V-belt and a speed changing mechanism portion in contact with weights of a centrifugal type of speed changing mechanism, with the ends on one side of the axial passages made to be open at the end, opposite the transmitting portion, of the movable sheave, with the other side ends connected to the radially inside ends of the radial passages, and with the radially outside ends of the radial passages made to be open at the outside circumferential portion of the movable sheave.

According to the invention as described above, since the inlet of the cooling air passage is made open to the side of the movable sheave, air is easy to flow in and flow through the cooling air passage with high efficiency. Therefore, the V-belt type automatic transmission may be provided that is capable of cooling the movable sheave securely.

According to a preferred embodiment, the transmitting portion and the speed changing mechanism portion are made as separate bodies with their respective axial portions secured to a movable sleeve. Therefore, among the members constituting the movable sheave, the only member that is formed in complicated shape is the speed changing mechanism portion, and the other members may be formed in simple shapes. As a result, manufacturing cost may be held low in spite of forming the cooling air passages in more complicated shapes than conventional.

## Claims

1. A V-belt type automatic transmission, comprising a drive pulley (22), a driven pulley (27), and a V-belt (28), wherein cooling air passages (47,48) are formed within a movable sheave (33) of said drive pulley (22), wherein air inlet openings (48a) of said cooling air passages (47,48) are positioned at an outer side of said movable sheave (33), which is located axially opposite to its side of contact with the V-belt (28), and wherein a plurality of axial passages (48) extend from the air inlet openings (48a) in axial direction within the axial portion of the movable sheave (33), and radial passages (47) extend from an inner end (48b) of said axial passages (48) to an outside circumferential portion of said movable sheave (33),
**characterized in that**
said radial passages (47) are formed between a transmitting portion (41) in contact with said V-belt (28) and a speed changing mechanism portion (34) in contact with weights (44) of a centrifugal type of speed changing mechanism.

2. V-belt type automatic transmission according to claim 1, **characterized in that** the transmitting portion (41) and the speed changing mechanism portion (34) are made as separate bodies.

3. V-belt type automatic transmission according to claim 2, **characterized in that** the respective axial portions of the transmitting portion (41) and of the speed changing mechanism portion (34) are secured to a movable sleeve (43).

4. V-belt type automatic transmission according to claim 3, **characterized in that** said axial passages are formed by grooves extending axially in an inside cylindrical portion of a weight holder (42) and the movable sleeve (43) being secured inside said cylindrical portion.

5. V-belt type automatic transmission according to one of the preceding claims 1 to 4, **characterized in that** the radial passages (47) are formed by positioning projecting walls (42a,42b) radially on a surface of a weight holder (42) opposite to the outer side thereof and by bringing the weight holder (42) into facing contact with the outer side of the transmitting portion (41).

6. V-belt type automatic transmission according to one of the preceding claims 1 to 5, **characterized in that** a cam plate (36) is situated at the outer side of the movable sheave (33).

7. V-belt type automatic transmission according to claim 6, **characterized in that** the cam plate (36) is formed in a dish shape with a plurality of through holes (50) formed in a disk portion (36a) located radially inward with respect to a peripheral portion (36b) contacting the weights (44).

8. V-belt type automatic transmission according to claim 7, **characterized in that** said through holes (50) face said air inlet openings (48a) of said cooling air passages (47,48).

## Patentansprüche

1. Ein mit einem Keilriemen versehenes stufenloses Getriebe (30), das eine Treibrad (22), eine angetriebene Riemenscheibe (27), und einen Keilriemen (28) aufweist, wobei Kühlluftdurchlässe (47, 48) innerhalb einer beweglichen Laufrolle (33) des Treibrads (22) vorgesehen sind, wobei Lufteinlassöffnungen (48a) dieser Kühlluftdurchlässe (47, 48) auf einer äußeren Seite der beweglichen Laufrolle (33) angeordnet sind, welche axial gegenüberliegend einer Kontaktseite mit dem Keilriemen angeordnet sind, und wobei eine Vielzahl axialer Durchlässe (48) von den Lufteinlassöffnungen (48a) sich in axialer Richtung innerhalb des axialen Bereichs der beweglichen Laufrolle (33) erstrecken, und radiale Durchlässe (47) erstrecken sich von einem inneren Ende (48b) der axialen Durchlässe (48) zu einem äußeren umfangsseitigen Bereich der beweglichen Laufrolle (33), **dadurch gekennzeichnet, dass** die radialen Durchlässe (47) zwischen einem Übertragungsbereich (41), der in Kontakt mit dem Keilriemen (28) steht, und einem Bereich eines Geschwindigkeitsveränderungsmechanismus (34), der in Kontakt mit Gewichten (44) einer zentrifugal angeordneten Geschwindigkeitsveränderungsmechanismus (34) steht, ausgebildet sind.

2. Ein mit einem Keilriemen versehenes stufenloses Getriebe (30), nach Anspruch 1, **dadurch gekennzeichnet, dass** der Übertragungsbereich (21) und der Bereich des Geschwindigkeitsveränderungsmechanismus (34) aus unterschiedlichen Teilen gefertigt sind.

3. Ein mit einem Keilriemen versehenes stufenloses Getriebe (30), nach Anspruch 2, **dadurch gekennzeichnet, dass** die axialen Bereichen des Übertragungsbereiches (41) bzw. des Bereichs des Geschwindigkeitsveränderungsmechanismus (34) durch eine bewegliche Laufrolle (43) gesichert sind.

4. Ein mit einem Keilriemen versehenes stufenloses Getriebe (30), nach Anspruch 3, **dadurch gekennzeichnet, dass** die axialen Durchlässe durch Rillen geformt sind, die sich axial in einem inneren zylindrischen Bereich eines Gewichtshalters (42) erstrecken und die bewegliche Laufrolle (43) innerhalb des zylindrischen Bereichs gesichert ist.

5. Ein mit einem Keilriemen versehenes stufenloses Getriebe (30), nach einem der vorstehenden Ansprüche 1 bis 4, **dadurch gekennzeichnet, dass** die radialen Durchlässe durch vorstehende Wände (42a, 42b) geformt sind, die radial auf eine Oberfläche der Gewichtshalter (42), der äußeren Seite gegenüberliegend, positioniert sind, und durch das in Kontakt-Bringen der Gewichtshalter (42) mit der äußeren Seite des Übertragungsbereiches (41).

6. Ein mit einem Keilriemen versehenes stufenloses Getriebe (30), nach einem der vorstehenden Ansprüche 1 bis 5, **dadurch gekennzeichnet, dass** eine Nockenplatte (36) auf der äußeren Seite der beweglichen Laufrolle (33) angeordnet ist.

7. Ein mit einem Keilriemen versehenes stufenloses Getriebe (30), nach Anspruch 6, **dadurch gekennzeichnet, dass** die Nockenplatte (36) eine Tellerform aufweist, mit einer Vielzahl von Durchgangslöchern (50), die in einem Scheibenbereich (36a) ausgeformt sind, wobei die Nockenplatte (36) radial nach innen hinsichtlich eines peripheren Bereichs (36b), der die Gewichte (44) berührt, gerichtet ist.

8. Ein mit einem Keilriemen versehenes stufenloses Getriebe (30), nach Anspruch 7, **dadurch gekennzeichnet, dass** die Durchgangslöcher (50) den Lufteinlassöffnungen (48a) der Kühlluftdurchlässe (47, 48) gegenüberliegen.

## Revendications

1. Transmission automatique du type à courroie trapézoïdale, comprenant une poulie d'entraînement (22), une poulie entraînée (27) et une courroie trapézoïdale (28), étant précisé que des passages d'air de refroidissement (47, 48) sont formés dans une roue mobile (33) de la poulie d'entraînement (22), que des orifices d'admission d'air (48a) des passages d'air de refroidissement (47, 48) sont placés sur un côté extérieur de ladite roue mobile (33), situé axialement à l'opposé de son côté de contact avec la courroie trapézoïdale (28), et que plusieurs passages axiaux (48) partent des orifices d'admission d'air (48a) dans le sens axial à l'intérieur de la partie axiale de la roue mobile (33), et que des passages radiaux (47) partent d'une extrémité intérieure (48b) des passages axiaux (48) et s'étendent vers une partie circonférentielle extérieure de la roue mobile (33),
**caractérisée en ce que** les passages radiaux (47) sont formés entre une partie de transmission (41) en contact avec la courroie trapézoïdale (28) et une partie de mécanisme de changement de vitesse (34) en contact avec des poids (44) d'un mécanisme de changement de vitesse du type centrifuge.

2. Transmission automatique du type à courroie trapézoïdale selon la revendication 1, **caractérisée en que** la partie de transmission (41) et la partie de mécanisme de changement de vitesse (34) sont réalisées sous la forme de corps séparés.

3. Transmission automatique du type à courroie trapézoïdale selon la revendication 2, **caractérisée en que** les parties axiales respectives de la partie de transmission (41) et de la partie de mécanisme de changement de vitesse (34) sont fixées à un manchon mobile (43).

4. Transmission automatique du type à courroie trapézoïdale selon la revendication 3, **caractérisée en que** les passages axiaux sont formés par des rainures qui s'étendent axialement dans une partie cylindrique intérieure d'un support de poids (42), et le manchon mobile (43) étant fixé à l'intérieur de ladite partie cylindrique.

5. Transmission automatique du type à courroie trapézoïdale selon l'une des revendications 1 à 4 précédentes, **caractérisée en que** l'on forme les passages radiaux (47) en plaçant des parois saillantes (42a, 42b) radialement sur une surface d'un support de poids (42) à l'opposé du côté extérieur de celui-ci, et en amenant le support de poids (42) en contact, face à face, avec le côté extérieur de la partie de transmission (41).

6. Transmission automatique du type à courroie trapézoïdale selon l'une des revendications 1 à 5 précédentes, **caractérisée en qu'**un disque à came (36) se trouve sur le côté extérieur de la roue mobile (33).

7. Transmission automatique du type à courroie trapézoïdale selon la revendication 6, **caractérisée en que** le disque à came (36) a une forme incurvée, avec plusieurs trous traversants (50) qui sont formés dans une partie de disque (36a) située radialement vers l'intérieur par rapport à une partie périphérique (36b) en contact avec les poids (44).

8. Transmission automatique du type à courroie trapézoïdale selon la revendication 7, **caractérisée en que** les trous traversants (50) font face aux orifices d'admission d'air (48a) des passages d'air de refroidissement (47, 48).
